# FASCICULE DE BREVET EUROPEEN

(11) **EP 3 469 427 B1**
(45) Date de publication et mention de la délivrance du brevet: **20.03.2024**
(21) Numéro de dépôt: 17728572.3
(22) Date de dépôt: 12.06.2017
(51) Int. Cl.: G05B 13/04, G05B 17/02, E03F 1/00

(54) **PROCEDE, PRODUIT PROGRAMME D'ORDINATEUR ET SYSTEME DE PILOTAGE DYNAMIQUE D'UN RESEAU FLUIDIQUE**
VERFAHREN, COMPUTERPROGRAMMPRODUKT UND SYSTEM ZUR DYNAMISCHEN STEUERUNG EINES FLUIDISCHEN NETZWERKS
METHOD, COMPUTER-PROGRAM PRODUCT AND SYSTEM FOR DYNAMICALLY CONTROLLING A FLUIDIC NETWORK

(30) Priorité: 14.06.2016 FR 1655502
(43) Date de publication de la demande: 17.04.2019
(73) Titulaire: Suez International, 92040 Paris La Défense Cedex (FR)
(72) Inventeur: SCHOORENS, Jérôme, 33360 Carignan de Bordeaux (FR); PERARNAUD, Jean-Jacques, 33140 Villenave d'Ornon (FR)
(74) Mandataire: Lavoix
(86) Numéro de dépôt international: PCT/EP2017/064215
(87) Numéro de publication internationale: WO 2017/216080

(56) Documents cités:
- CEMBRANO G; QUEVEDO J; SALAMERO M; PUIG V; FIGUERAS J; MARTI J: "Optimal control of urban drainage systems. A case study", CONTROL ENGINEERING PRACTICE, vol. 12, no. 1, 2002, pages 1-9, XP002765891, ISSN: 0967-0661, DOI: 10.1016/S0967-0661(02)00280-0

## Description

### Introduction

La présente invention appartient au domaine du pilotage d'un réseau fluidique.

La présente invention concerne également un produit programme d'ordinateur pour mettre en oeuvre le procédé selon l'invention ainsi qu'un système de pilotage dynamique.

### Etat de la technique antérieur

A l'heure actuelle, les réseaux fluidiques, notamment ceux de type réseau d'assainissement, présentent des risques relatifs au déversement et au débordement du fluide transporté par le réseau dans le milieu naturel. Il existe donc un besoin, pour un réseau fluidique, de piloter des équipements dudit réseau de manière optimale, en déterminant une configuration de fonctionnement dudit réseau fluidique.

Un objectif de l'invention est de proposer un procédé de pilotage du réseau fluidique en valorisant le patrimoine existant dans ledit réseau fluidique, c'est-à-dire ses équipements, dans le but de limiter les investissements tout en accroissant les performances du réseau fluidique.

Le document CEMBRANO ET AL.: "Optimal control of urban drainage systems. A case study", 2002 divulgue un procédé similaire.

### Exposé de l'invention

On atteint un tel objectif avec, selon un premier aspect de l'invention, un procédé selon la revendication 1.

De préférence, le procédé selon l'invention est mis en oeuvre en temps réel.

Le réseau fluidique peut être un réseau d'assainissement de l'eau.

Le seuil de durée de prévision de fonctionnement est de préférence supérieur à deux heures.

Un modèle de type paramétrique est un modèle comportant des paramètres, lesdits paramètres pouvant être ajustés de sorte que les valeurs calculées d'une variable ou d'une grandeur par ledit modèle soient aussi proches que possible des valeurs observées de cette variable ou de cette grandeur.

Lorsque le réseau fluidique est de type hydraulique, des eaux claires parasites permanentes, ou ECPP, peuvent s'insérer dans ledit réseau. Lesdites eaux claires parasites permanentes sont prises en compte par le modèle au moyen de remontées de données métrologiques d'informations, par un équipement métrologique dudit réseau fluidique, relatives à la présence de ces eaux claires parasites permanentes dans ledit équipement métrologique.

Par étape de calage en ligne, la présente demande désigne un calage dynamique du modèle réalisé de sorte que les valeurs calculées d'une variable ou d'une grandeur par ledit modèle soient aussi proches que possible des valeurs observées de cette variable ou de cette grandeur.

La présente demande désigne, par stratégie de pilotage, une stratégie de gestion du réseau fluidique.

Au moins un objectif de la présente invention est résolu par le couplage des étapes de prévision de fonctionnement et de sélection de stratégie de pilotage.

Le procédé de pilotage selon l'invention peut comprendre une réception de la consigne de régulation, au niveau de l'actionneur, et une application de ladite consigne de régulation.

L'application de la consigne de régulation peut par exemple être réalisée par un actionneur électronique, de manière automatique, après réception de la consigne de régulation, par exemple au moyen d'un réseau téléphonique ou encore d'un réseau de données.

Alternativement, ou en combinaison avec ce qui précède, l'application de la consigne de régulation peut par exemple être réalisée par un opérateur, après réception de ladite consigne de régulation, par exemple au moyen d'un réseau téléphonique.

Un équipement métrologique peut, par exemple, être un capteur hydraulique ou un pluviomètre. Plus généralement, une donnée métrologique relative à un équipement métrologique peut être toute donnée relative à une donnée fournie par une supervision, par exemple système SCADA, du réseau fluidique.

Un organe de régulation peut, par exemple, être une vanne de sectionnement, un seuil régulé, un poste pompage, un bassin de rétention ou une pompe.

De nombreux moyens peuvent être mis en oeuvre pour que, selon l'invention, la durée de l'ensemble des étapes du procédé soit inférieure à un seuil, dit durée du cycle, ladite durée du cycle étant de préférence inférieure à 5 minutes.

A cet effet, il est par exemple possible, selon une première possibilité, de mettre en oeuvre une étape optimisée de récupération des données métrologiques, par exemple en ne relevant que les dernières données générées par l'équipement métrologique.

Il est aussi possible, en combinaison ou alternativement avec la première possibilité, de mettre en oeuvre un procédé comportant une étape d'associer à chaque donnée métrologique une qualification relative à des conditions de sa collecte et/ou de son archivage. Il est alors possible d'optimiser l'interrogation de bases de données comportant lesdites données de modèle en générant des requêtes d'interrogation desdites bases de données comportant une restriction du domaine de recherche à une condition de collecte particulière et/ou à un archivage particulier.

Il est aussi possible, en combinaison ou alternativement avec l'une ou plusieurs des possibilités précédentes, de mettre en oeuvre des algorithmes de parallélisation. Il est par exemple possible de paralléliser des calculs propres à la qualification.

Il est aussi possible, en combinaison ou alternativement avec l'une ou plusieurs des possibilités précédentes, de mettre en oeuvre des configurations des modèles hydrologiques et hydrauliques. Il est par exemple possible, plutôt que de mettre en oeuvre un algorithme de calcul sur un modèle très détaillé du réseau, de déterminer, par agrégation, un ou plusieurs agrégats, d'un ou plusieurs noeuds du réseau et de mettre en oeuvre ledit algorithme de calcul à partir desdits un ou plusieurs agrégats déterminés. Cette caractéristique a pour avantage de stabiliser les calculs et ainsi limiter les temps de calcul.

Il est aussi possible, en combinaison ou alternativement avec l'une ou plusieurs des possibilités précédentes, de mettre en oeuvre des procédés dits de reprise à chaud, en anglais, « hot start proceses ».

Il est aussi possible, en combinaison ou alternativement avec l'une ou plusieurs des possibilités précédentes, de mettre en mémoire tampon des calculs non cycliques, mais utilisés à chaque cycle de calculs. Par exemple, il est possible de mettre en mémoire tampon une assignation spatiale des pluviomètres avec les bassins versants lors du calcul des lames d'eau précipitées.

Avantageusement, une donnée desdites données du modèle du procédé est associée à un état, dit état de validation, ledit procédé comprenant en outre une étape de filtrage de ladite donnée à partir dudit état de validation. L'état de validation peut, par exemple, être choisi parmi deux états : état valide et état invalide. Il est ainsi possible de prendre en compte, ou de ne pas prendre en compte, toute donnée du modèle, par exemple une donnée métrologique ou une donnée météorologique.

Lorsqu'une donnée est invalide, il est possible de ne plus prendre en compte cette donnée dans des processus de calcul et de prise de décision mis en oeuvre dans l'étape de prévision de fonctionnement et/ou dans l'étape de sélection d'une stratégie de pilotage. Cette invalidation peut être réalisée sur des valeurs déjà acquises ou sur une série de données futures lorsqu'un opérateur est, par exemple, en possession d'informations permettant d'anticiper un possible dysfonctionnement, pouvant, par exemple, être dû à une maintenance, un test de pluviométrie ou d'équipement.

Selon une possibilité du procédé selon l'invention, l'état de validation est déterminé à partir d'un procédé de validation, de type automatique. Des algorithmes métiers peuvent êtres implémentés pour réaliser de telles déterminations de l'état de validation d'une donnée.

Selon une autre possibilité du procédé selon l'invention, éventuellement en combinaison, préalablement ou ultérieurement à l'étape de détermination de l'état de validation de type automatique, l'état de validation est déterminé à partir d'un procédé de validation, de type manuel. Il est ainsi possible de laisser des experts déterminer manuellement l'état de validation desdites données.

Avantageusement, une donnée desdites données du modèle est associée à un état, dit état de priorité, le procédé comprenant en outre une étape de tri de ladite donnée à partir dudit état de priorité. L'état de priorité peut, par exemple, être choisi parmi les entiers naturels. Il est ainsi possible de prendre en compte, de manière prioritaire ou non par rapport à une autre donnée, toute donnée du modèle, par exemple une donnée métrologique ou une donnée météorologique.

Selon une possibilité du procédé selon l'invention, l'état de priorité est déterminé à partir d'un procédé de tri, de type automatique. Des algorithmes métiers peuvent êtres implémentés pour réaliser de telles déterminations de l'état de priorité d'une donnée.

Selon une autre possibilité du procédé selon l'invention, éventuellement en combinaison, préalablement ou ultérieurement à l'étape de détermination de l'état de priorité automatique, l'état de priorité est déterminé à partir d'un procédé de tri, de type manuel. Il est ainsi possible de laisser des experts déterminer manuellement l'état de priorité desdites données.

Avantageusement, un équipement de détermination d'état d'un équipement métrologique peut déterminer l'état de l'équipement métrologique et générer une donnée d'état de l'équipement métrologique, la donnée métrologique étant générée à partir de ladite donnée d'état. L'étape de détermination de l'état de l'équipement métrologique peut être mise en oeuvre préalablement aux autres étapes du procédé.

Par exemple, l'étape de détermination de l'état de l'équipement métrologique peut être mise en oeuvre pour invalider, pour une période prédéterminée dans le futur, et générer des données métrologiques non prises en compte par le modèle pendant ladite période prédéterminée. Plusieurs solutions techniques sont possibles, par exemple celle de supprimer ladite donnée métrologique, ou, le cas échéant, de lui attribuer un statut invalide ou encore une priorité nulle.

Selon une particularité, l'étape de génération de prévisions météorologiques peut comprendre une étape de réception et une étape de traitement de données externes provenant d'un pluviomètre et/ou d'un radar pluviométrique, la donnée météorologique étant générée à partir du traitement desdites données externes. Il est ainsi possible de récupérer des données externes brutes ou « raw data » en anglais, et de les traiter pour déterminer une prévision météorologique. Les données externes brutes peuvent provenir d'un équipement métrologique, tel qu'un pluviomètre, ou encore de lames d'eau radar provenant, par exemple, d'un réseau de communication raccordé à un radar pluviométrique.

Selon une possibilité, la stratégie de pilotage est sélectionnée manuellement. Cette possibilité permet des prises de décision par des experts du pilotage du réseau fluidique.

Selon une autre possibilité, la stratégie de pilotage est sélectionnée automatiquement. Cette stratégie peut être sélectionnée par des algorithmes de décision, par exemple selon des arbres de décision. Cette caractéristique a pour avantage de permettre une prise de décision par des modèles de pilotage.

De préférence, l'étape de génération de données métrologiques et/ou l'étape de génération de prévisions météorologiques est mise en oeuvre à une fréquence prédéterminée, de préférence selon une période de temps inférieure à 5 minutes. Cette caractéristique a pour avantage de permettre un rafraîchissement quasi temps réel des données acquises, ce qui permet un meilleur calage du modèle.

De préférence, la durée de prévision météorologique est supérieure à un seuil de durée météorologique, ledit seuil de durée météorologique étant de préférence supérieur à 1 heure. Cette caractéristique a pour avantage de permettre une prévision météorologique à moyen terme.

Selon un deuxième aspect de l'invention, il est proposé un produit programme d'ordinateur selon la revendication 10.

Selon encore un autre aspect de l'invention, il est proposé un système de pilotage dynamique d'un réseau fluidique selon la revendication 11.

Avantageusement, le réseau fluidique peut être un réseau d'assainissement comprenant un exutoire, de préférence une station d'épuration lorsque le réseau fluidique est un réseau d'assainissement d'eau, l'étape de génération de donnée métrologique comprenant une acquisition d'une donnée métrologique relative à cet exutoire.

Une donnée métrologique relative à cet exutoire peut, par exemple, être une donnée relative à la capacité de la station d'épuration. Cette capacité peut être déterminée, de préférence directement, à partir de la capacité de pompage et/ou de la capacité de transfert disponible en entrée de la station d'épuration. Il est notamment possible de réduire les flux en entrée de la station d'épuration si celle-ci à une capacité de traitement limité.

Une donnée métrologique relative à cet exutoire peut, alternativement ou en combinaison avec ce qui précède, par exemple, être une donnée relative à une filière de traitement fonctionnellement intégrée à ladite station d'épuration.

Une donnée métrologique relative à cet exutoire peut, alternativement ou en combinaison avec ce qui précède, par exemple, être relative à une performance, et/ou un état de fonctionnement d'une filière de la station d'épuration. Une filière peut être une filière de prétraitement, un décanteur primaire, un biofiltre.

### Description des figures

D'autres particularités et avantages de l'invention apparaîtront à la lecture de la description détaillée de mises en oeuvre et de modes de réalisation nullement limitatifs, au regard de figures annexées sur laquelle :

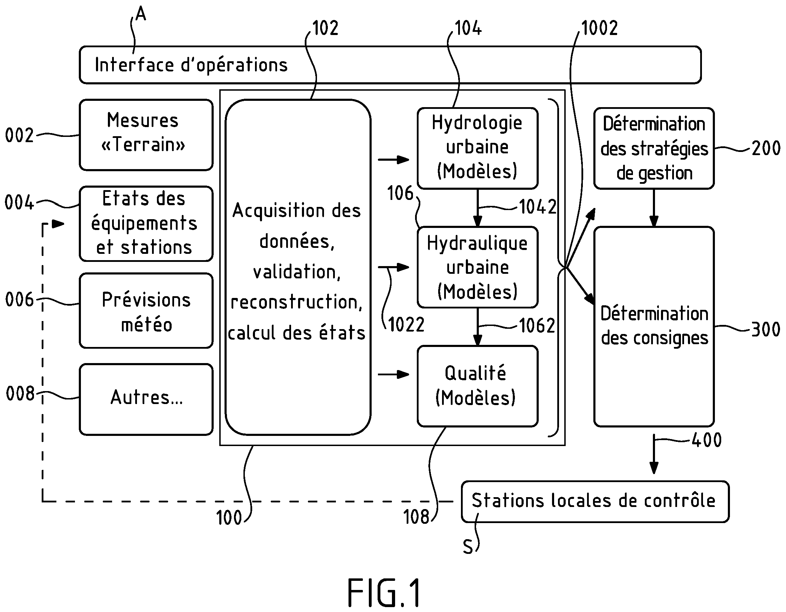

- la figure 1 est une vue schématique d'un mode de réalisation d'un procédé selon l'invention.

### Description de l'invention

Il est illustré sur la figure 1 un mode de réalisation d'un procédé 1 de pilotage dynamique d'un réseau fluidique par un module de supervision, ledit procédé comprenant :
- une étape 100, dite de prévision de fonctionnement,
- une étape 200, dite de sélection d'une stratégie de pilotage,
- une étape 300, dite de génération de consignes,
- une transmission 400 de la consigne de régulation à destination d'un actionneur du réseau fluidique.

L'étape de prévision de fonctionnement 100 comprend :
- une étape 102 d'acquisition de données, de validation, de reconstruction et de calcul des états,
- une étape 104 comportant une mise en oeuvre de modèles d'hydrologie urbaine,
- une étape 106 comportant une mise en oeuvre de modèles d'hydraulique urbaine,
- une étape 108 comportant une mise en oeuvre de modèles de qualité.

L'étape 102 reçoit des données d'entrée, qui peuvent provenir :
- d'une étape de détermination 002 de données de mesures « Terrain », qui comprend des mesures, par exemple de niveau, sur un terrain pouvant affecter, ou être affecté, par le réseau fluidique,
- d'une étape de détermination 004 de données relatives à des états d'équipement et de station, qui comprennent des descriptions d'équipement et de station du réseau fluidique,
- d'une étape de détermination 006 de données de prévisions météorologiques, qui comprennent des prévisions météorologiques susceptibles d'affecter le réseau fluidique,
- d'une étape de détermination 008 d'autres données susceptibles d'affecter le réseau fluidique, comme des données relatives à une maintenance programmée d'un équipement du réseau fluidique, ou des données relatives aux caractéristiques aérauliques, ou encore à des conditions océaniques, par exemple le niveau de la mer et/ou des conditions de houle et/ou d'évaporation, ou des données relatives à des flux bactériologiques terrestres provenant, par exemple, du réseau fluidique ou de rivière(s).

L'étape 102 génère des données 1022 qui peuvent être utilisées par l'étape 104, et/ou l'étape 106, et/ou l'étape 108.

Les modèles d'hydrologie urbaine mis en oeuvre au cours de l'étape 104 comprennent au moins un modèle hydraulique. Le modèle hydraulique peut, par exemple, être préexistant à la mise en place d'un procédé ou d'un système selon l'invention.

L'étape 104 génère des données 1042 qui peuvent être utilisées par l'étape 106.

Les modèles d'hydraulique urbaine mis en oeuvre au cours de l'étape 106 comprennent au moins un modèle hydraulique, de type paramétrique.

Le modèle hydraulique reçoit des données, dites données du modèle. Les données du modèle comportent au moins :
- une donnée métrologique 1042 relative à un état d'un équipement métrologique du réseau fluidique. La donnée métrologique est générée au cours d'une étape, dite de génération de données métrologique, mise en oeuvre au cours de l'étape 104, et
- une donnée météorologique, comprise dans les données 1022, générées au cours de l'étape 102. La donnée météorologique est relative à une prévision météorologique affectant ledit réseau fluidique. La donnée météorologique décrit une prévision météorologique sur une durée, dite durée de prévision météorologique.

Les données du modèle hydraulique peuvent comprendre une autre donnée, comprise dans les données 1022, générées au cours de l'étape 102. L'autre donnée peut par exemple être une donnée provenant de mesures de niveau sur un terrain.

L'étape de prévision de fonctionnement 100 comporte en outre une étape de calage en ligne, non représentée, du modèle hydraulique à partir de la donnée métrologique 1042. L'étape de calage en ligne est mise en oeuvre au cours de l'étape 106.

L'étape 106 génère des données 1062 qui peuvent être utilisées par l'étape 108.

Les modèles de qualité mis en oeuvre au cours de l'étape 108 comprennent au moins un modèle de qualité bactériologique du milieu naturel. Un modèle de qualité bactériologique du milieu naturel met, par exemple, en oeuvre des données provenant de l'étape 008, par exemple des données relatives aux caractéristiques aérauliques, ou encore à des conditions océaniques, par exemple le niveau de la mer et/ou des conditions de houle et/ou d'évaporation, ou des données relatives à des flux bactériologiques terrestres provenant, par exemple, du réseau fluidique ou de rivière(s).

L'étape 108 génère une donnée de sortie, qui est aussi une donnée de sortie de l'étape 100, référencée 1002, qui peut être utilisée par l'une, et/ou l'autre des étapes 200 et 300.

La donnée de sortie 1002 est une donnée de prévision, relative à un fonctionnement du réseau fluidique, sur une durée, dite durée de prévision de fonctionnement.

La durée de prévision de fonctionnement peut être supérieure à un seuil de durée de prévision de fonctionnement. Le seuil de durée de prévision de fonctionnement peut être supérieur à deux heures.

L'étape 200 comporte une sélection d'une stratégie de pilotage du réseau fluidique à partir de la donnée métrologique et/ou de la donnée météorologique 1042 et/ou et de la donnée de prévision 1002.

La sélection de la stratégie de pilotage peut comprendre la mise en oeuvre d'arbres de décisions, mettant en oeuvre des données métrologie, et/ou des données météorologiques, et/ou des données de prévision.

La sélection d'une stratégie de pilotage peut comprendre un procédé de sélection à hystérésis, tendant ainsi à conserver une stratégie de pilotage, après sélection de ladite stratégie de pilotage, lorsque la cause extérieure ayant conduit à ladite sélection a cessé.

La stratégie de pilotage peut être réactualisée toutes les 5 minutes.

La stratégie de pilotage peut être choisie parmi les stratégies suivantes :
- gestion en temps sec,
- gestion de dépollution, et
- gestion en cas d'inondation.

La stratégie de pilotage en temps sec vise à gérer les apports en temps sec. En temps sec, les effluents sont traités dans la station d'épuration. On interdit alors le stockage par les capacités de stockage. On interdit également le rejet dans le milieu naturel, c'est-à-dire, par exemple dans la mer, un fleuve ou encore une rivière. Bien entendu, la configuration de pilotage est déterminée de sorte qu'il n'y ait pas de débordement.

La stratégie de gestion de dépollution favorise l'utilisation de capacités de stockage et de transport du réseau fluidique en limitant, en outre, les déversements dans le milieu naturel.

La stratégie de gestion en cas d'inondation est proposée lorsque la nature d'un événement pluvieux présente des risques d'inondation et que les capacités de stockage du réseau fluidique ont toutes été sollicitées à leur maximum. On favorise l'utilisation de capacités de stockage et de transport du réseau fluidique en autorisant les déversements dans le milieu naturel, par exemple la rivière ou la mer.

L'étape 300 comporte une génération d'une consigne de régulation à destination de l'actionneur d'un organe de régulation du réseau fluidique, à partir de la stratégie de pilotage sélectionnée au cours de l'étape 200, de la donnée métrologique et/ou de ladite donnée météorologique 1042 et/ou de ladite donnée de prévision 1002.

Une fois la transmission 400 de la consigne de régulation à destination dudit actionneur effectuée, une ou plusieurs stations locales de contrôle S peuvent recevoir ladite consigne, par exemple au moyen d'un réseau de communication, comportant éventuellement des moyens de transmission sans-fil.

La station locale de contrôle comprenant ledit actionneur peut alors appliquer ladite consigne d'actionneur, de préférence de manière automatique, ce qui modifie alors l'état d'un équipement comprenant ledit actionneur. Cette modification est illustrée, sur la figure 1, par la ligne en pointillés reliant les stations locales de contrôle S et l'étape 004.

Les différentes étapes peuvent être supervisées au moyen d'une interface d'opération A, par exemple réalisée sous la forme d'un produit programme d'ordinateur.

## Revendications

1. Procédé de pilotage dynamique d'un réseau fluidique par un module de supervision, ledit procédé comprenant :
- une étape, dite de prévision de fonctionnement, comportant une génération d'une donnée de prévision, relative à un fonctionnement dudit réseau fluidique, sur une durée, dite durée de prévision de fonctionnement, la durée de prévision de fonctionnement étant de préférence supérieure à un seuil de durée de prévision de fonctionnement, ladite étape de prévision de fonctionnement mettant en oeuvre des modèles de qualité comprenant au moins un modèle de qualité bactériologique du milieu naturel et un modèle hydraulique, de type paramétrique, les modèles de qualité et le modèle hydraulique recevant des données, dites données du modèle, lesdites données du modèle comportant au moins :
- des données de mesures «Terrain» comprenant des mesures de niveau sur un terrain pouvant affecter ou être affecté par le réseau fluidique,
- une donnée métrologique relative à un état d'un équipement métrologique dudit réseau fluidique, ladite donnée métrologique étant générée au cours d'une étape, dite de génération de données métrologique,
- une donnée météorologique relative à une prévision météorologique affectant ledit réseau fluidique, ladite donnée météorologique étant générée au cours d'une étape, dite de génération de prévisions météorologiques, ladite donnée météorologique décrivant une prévision météorologique sur une durée, dite durée de prévision météorologique,
- d'autres données susceptibles d'affecter le réseau fluidique comprenant des données relatives à des flux bactériologiques terrestres provenant de rivière(s),
ladite étape de prévision de fonctionnement comportant en outre une étape de calage en ligne dudit modèle hydraulique à partir de ladite donnée métrologique,
- une étape, dite de sélection d'une stratégie de pilotage, comportant une sélection d'une stratégie de pilotage dudit réseau fluidique à partir des données reçues par les modèles de qualité et le modèle hydraulique,
- une étape, dite de génération de consignes, comportant une génération d'une consigne de régulation à destination d'un actionneur d'un organe de régulation dudit réseau fluidique, à partir de ladite stratégie de pilotage sélectionnée, de ladite donnée métrologique, de ladite donnée météorologique et de ladite donnée de prévision,
- une transmission de la consigne de régulation à destination dudit actionneur.

2. Procédé selon la revendication 1, dans lequel la durée de l'ensemble des étapes du procédé est inférieure à un seuil, dit durée du cycle, ladite durée du cycle étant de préférence inférieure à 5 minutes.

3. Procédé selon la revendication 1 ou 2, dans lequel une donnée desdites données du modèle est associée à un état, dit état de validation, le procédé comprenant en outre une étape de filtrage de ladite donnée à partir dudit état de validation.

4. Procédé selon la revendication 3, dans lequel l'état de validation est déterminé à partir d'un procédé de validation, de type automatique.

5. Procédé selon l'une quelconque des revendications précédentes, dans lequel un équipement de détermination d'état d'un équipement métrologique détermine l'état dudit équipement métrologique et génère une donnée d'état de l'équipement métrologique, la donnée métrologique étant générée à partir de ladite donnée d'état.

6. Procédé selon l'une quelconque des revendications précédentes, dans lequel l'étape de génération de prévisions météorologiques comprend une étape de réception et une étape de traitement de données externes provenant d'un pluviomètre et/ou d'un radar pluviométrique, la donnée météorologique étant générée à partir du traitement desdites données externes.

7. Procédé selon l'une quelconque des revendications précédentes, dans lequel la stratégie de pilotage est sélectionnée manuellement.

8. Procédé selon l'une quelconque des revendications 1 à 6, dans lequel la stratégie de pilotage est sélectionnée automatiquement.

9. Procédé selon l'une quelconque des revendications précédentes, dans lequel l'étape de génération de données métrologiques et/ou l'étape de génération de prévisions météorologiques est mise en oeuvre à une fréquence prédéterminée, de préférence selon une période de temps inférieure à 5 minutes.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre d'un procédé de pilotage dynamique en temps réel d'un réseau fluidique selon l'une quelconque des revendications précédentes.

11. Système de pilotage dynamique en temps réel d'un réseau fluidique comportant :
- un module, dit de prévision de fonctionnement, configuré pour générer une donnée de prévision, relative à un fonctionnement du réseau fluidique sur une durée, dite durée de prévision de fonctionnement, la durée de prévision de fonctionnement étant de préférence supérieure à un seuil de durée de prévision de fonctionnement, ledit seuil de durée de prévision de fonctionnement étant de préférence supérieure à 2 heures, ledit module de prévision de fonctionnement comportant des modèles de qualité comprenant au moins un modèle de qualité bactériologique du milieu naturel et un modèle hydraulique, de type paramétrique, les modèles de qualité et le modèle hydraulique étant configuré pour recevoir des données, dites données du modèle, lesdites données du modèle comportant au moins :
- des données de mesures «Terrain» comprenant des mesures de niveau sur un terrain pouvant affecter ou être affecté par le réseau fluidique,
- une donnée métrologique relative à un état d'un équipement métrologique dudit réseau fluidique, ladite donnée métrologique étant générée par un module, dit module de génération de données métrologique,
- une donnée météorologique relative à une prévision météorologique affectant ledit réseau fluidique, ladite donnée météorologique étant générée par un module, dit de génération de prévision météorologique, ladite donnée météorologique décrivant une prévision météorologique sur une durée, dite durée de prévision météorologique,
- d'autres données susceptibles d'affecter le réseau fluidique comprenant des données relatives à des flux bactériologiques terrestres provenant de rivière(s),
ledit module de prévision de fonctionnement comportant en outre des moyens de calage dudit modèle hydraulique à partir de ladite donnée métrologique,
- un module, dit de sélection de stratégie de pilotage, configuré pour sélectionner une stratégie de pilotage dudit réseau fluidique à partir des données reçues par les modèles de qualité et le modèle hydraulique,
- un module, dit de génération de consignes, configuré pour générer une consigne de régulation à destination d'un actionneur d'un organe de régulation dudit réseau fluidique, à partir de ladite stratégie de pilotage, de ladite donnée métrologique, de ladite donnée météorologique, et de ladite donnée de prévision,
- un module de transmission configuré pour transmettre ladite consigne de régulation à destination dudit actionneur.

12. Système selon la revendication précédente, dans lequel le réseau fluidique est un réseau d'assainissement comprend un exutoire, de préférence une station d'épuration lorsque le réseau fluidique est un réseau d'assainissement d'eau, l'étape de génération de donnée métrologique comprenant une acquisition d'une donnée métrologique relative à cet exutoire.

## Patentansprüche

1. Verfahren zur dynamischen Steuerung eines fluidischen Netzwerks durch ein Überwachungsmodul, wobei das Verfahren umfasst:
- - einen als Betriebsvorhersage bezeichneten Schritt, der eine Generierung einer Vorhersageangabe umfasst, die sich auf einen Betrieb des fluidischen Netzwerks über eine als Betriebsvorhersagedauer bezeichnete Dauer bezieht, wobei die Betriebsvorhersagedauer vorzugsweise größer als ein Betriebsvorhersagedauer-Schwellenwert ist, wobei der Schritt der Betriebsvorhersagedauer Qualitätsmodelle anwendet, die mindestens ein Modell der bakteriologischen Qualität der natürlichen Umgebung und ein hydraulisches Modell vom Parametertyp umfasst, wobei die Qualitätsmodelle und das hydraulische Modell als Modelldaten bezeichnete Daten empfangen, wobei die Modelldaten mindestens aufweisen :
- "Gelände"-Messdaten, die Niveaumessungen auf einem Gelände umfassen, das von dem fluidischen Netzwerk beeinflusst werden kann oder beeinflusst wird,
- eine metrologische Angabe, die sich auf einen Zustand einer metrologischen Ausrüstung des fluidischen Netzwerks bezieht, wobei die metrologische Angabe in einem als Generierung von metrologischen Daten bezeichneten Schritt generiert wird,
- eine meteorologische Angabe, die sich auf eine meteorologische Vorhersage bezieht, die das fluidische Netzwerk beeinflusst, wobei die meteorologische Angabe in einem als Generierung von meteorologischen Vorhersagen bezeichneten Schritt generiert wird, wobei die meteorologische Angabe eine meteorologische Vorhersage über eine als Dauer der meteorologischen Vorhersage bezeichnete Dauer beschreibt,
- andere Daten, die das fluidische Netzwerk beeinflussen können, die Daten umfassen, die sich auf terrestrische bakteriologische Ströme aus einem Fluss/Flüssen beziehen,
wobei der Schritt der Betriebsvorhersage ferner einen Schritt der Online-Kalibrierung des hydraulischen Modells anhand der metrologischen Angabe umfasst,
- einen als Auswahl einer Steuerungsstrategie bezeichneten Schritt, der eine Auswahl einer Strategie zur Steuerung des fluidischen Netzwerks anhand der von den Qualitätsmodellen und dem hydraulischen Modell empfangenen Daten umfasst,
- einen als Sollwertgenerierung bezeichneten Schritt, der eine Generierung eines Regelungssollwerts für einen Aktuator eines Regelungsorgans des fluidischen Netzwerks anhand der ausgewählten Steuerungsstrategie, der metrologischen Angabe, der meteorologischen Angabe und der Vorhersageangabe aufweist,
- eine Übertragung des Regelungssollwerts an den Aktuator.

2. Verfahren nach Anspruch 1, wobei die Dauer aller Verfahrensschritte unter einem als Zyklusdauer bezeichneten Schwellenwert liegt, wobei die Zyklusdauer vorzugsweise weniger als 5 Minuten beträgt.

3. Verfahren nach Anspruch 1 oder 2, wobei eine Angabe der Modelldaten mit einem als Validierungszustand bezeichneten Zustand verknüpft ist, wobei das Verfahren ferner einen Schritt des Filterns der Angabe anhand des Validierungszustands umfasst.

4. Verfahren nach Anspruch 3, wobei der Validierungszustand anhand eines Validierungsverfahrens vom automatischen Typ bestimmt wird.

5. Verfahren nach einem der vorhergehenden Ansprüche, wobei eine Ausrüstung zur Bestimmung des Zustands einer metrologischen Ausrüstung den Zustand der metrologischen Ausrüstung bestimmt und eine Zustandsangabe der metrologischen Ausrüstung generiert, wobei die metrologische Angabe anhand der Zustandsangabe generiert wird.

6. Verfahren nach einem der vorhergehenden Ansprüche, wobei der Schritt des Generierens meteorologischer Vorhersagen einen Schritt des Empfangens und einen Schritt des Verarbeitens externer Daten umfasst, die von einem Regenmesser und/oder einem Regenradar kommen, wobei die meteorologische Angabe anhand der Verarbeitung der externen Daten generiert wird.

7. Verfahren nach einem der vorhergehenden Ansprüche, wobei die Steuerungsstrategie manuell ausgewählt wird.

8. Verfahren nach einem der Ansprüche 1 bis 6, wobei die Steuerungsstrategie automatisch ausgewählt wird.

9. Verfahren nach einem der vorhergehenden Ansprüche, wobei der Schritt des Generierens von metrologischen Daten und/oder der Schritt des Generierens von meteorologischen Vorhersagen in einem bestimmten Zeitintervall durchgeführt wird, vorzugsweise in einem Zeitraum von weniger als 5 Minuten.

10. Computerprogrammprodukt, das von einem Kommunikationsnetz herunterladbar und/oder auf einem computerlesbaren Medium gespeichert und/oder von einem Mikroprozessor ausführbar ist, **dadurch gekennzeichnet, dass** es Programmcodeanweisungen zur Durchführung eines Verfahrens zur dynamischen Echtzeitsteuerung eines fluidischen Netzwerks nach einem der vorhergehenden Ansprüche umfasst.

11. System zur dynamischen Echtzeitsteuerung eines fluidischen Netzwerks, das aufweist:
- ein als Betriebsvorhersagemodul bezeichnetes Modul, das ausgelegt ist, um eine Vorhersageangabe zu generieren, die sich auf einen Betrieb des fluidischen Netzwerks über eine als Betriebsvorhersagedauer bezeichnete Dauer bezieht, wobei die Betriebsvorhersagedauer vorzugsweise größer als ein Betriebsvorhersagedauer-Schwellenwert ist, wobei der Betriebsvorhersagedauer-Schwellenwert vorzugsweise größer als 2 Stunden ist, wobei das Betriebsvorhersagemodul Qualitätsmodelle aufweist, die mindestens ein Modell der bakteriologischen Qualität der natürlichen Umgebung und ein hydraulisches Modell vom Parametertyp umfasst, wobei die Qualitätsmodelle und das hydraulische Modell dazu ausgelegt sind, als Modelldaten bezeichnete Daten zu empfangen, wobei die Modelldaten mindestens aufweisen:
- "Gelände"-Messdaten, die Niveaumessungen auf einem Gelände umfassen, das von dem fluidischen Netzwerk beeinflusst werden kann oder beeinflusst wird,
- eine metrologische Angabe, die sich auf einen Zustand einer metrologischen Ausrüstung des fluidischen Netzwerks bezieht, wobei die metrologische Angabe durch ein als Modul zur Generierung von metrologischen Daten bezeichnetes Modul generiert wird,
- eine meteorologische Angabe, die sich auf eine meteorologische Vorhersage bezieht, die das fluidische Netzwerk beeinflusst, wobei die meteorologische Angabe durch ein als Modul zur Generierung von meteorologischen Vorhersagen bezeichnetes Modul generiert wird, wobei die meteorologische Angabe eine meteorologische Vorhersage über eine als Dauer der meteorologischen Vorhersage bezeichnete Dauer beschreibt,
- andere Daten, die das fluidische Netzwerk beeinflussen können, die Daten umfassen, die sich auf terrestrische bakteriologische Ströme aus einem Fluss/Flüssen beziehen,
wobei das Betriebsvorhersagemodul ferner Mittel zur Kalibrierung des hydraulischen Modells anhand der metrologischen Angabe umfasst,
- ein als Modul zur Auswahl der Steuerungsstrategie bezeichnetes Modul, das dazu ausgelegt ist, eine Strategie zur Steuerung des fluidischen Netzwerks anhand der von den Qualitätsmodellen und dem hydraulischen Modell empfangenen Daten auszuwählen,
- ein als Modul zur Sollwertgenerierung bezeichnetes Modul, das dazu ausgelegt ist, einen Regulierungssollwert für einen Aktuator eines Regelungsorgans des fluidischen Netzwerks anhand der Steuerungsstrategie, der metrologischen Angabe, der meteorologischen Angabe und der Vorhersageangabe zu generieren,
- ein Übertragungsmodul, das dazu ausgelegt ist, den Regelungssollwert an den Aktuator zu übertragen.

12. System nach vorhergehendem Anspruch, wobei das fluidische Netzwerk ein Abwassernetzwerk ist, das einen Ausleitung, vorzugsweise eine Kläranlage, umfasst, wenn das fluidische Netzwerk ein Wasser-Abwassernetzwerk ist, wobei der Schritt des Generierens einer metrologischen Angabe eine Erfassung einer metrologischen Angabe umfasst, die sich auf diese Ausleitung bezieht.

## Claims

1. A method of dynamically controlling a fluid network using a supervision module, said method comprising:
- a so-called operation prediction step, comprising the generation of prediction data relating to the operation of the said fluid network over a period, referred to as an operation prediction period, the operation prediction period preferably being greater than an operation prediction period threshold, the said operation prediction stage implementing quality models comprising at least one bacteriological quality model for the natural environment and a hydraulic model receiving data, the quality models and the hydraulic model receiving data, referred to as model data, said model data comprising at least:
- "Terrain" measurement data comprising level measurements on a terrain that may affect or be affected by the fluid network.
- metrological data relating to the state of a piece of metrological equipment in the said fluid network, the said metrological data being generated during a step known as metrological data generation,
- meteorological data relating to a weather forecast affecting the said fluid network, the said meteorological data being generated during a step known as weather forecast generation, the said meteorological data describing a weather forecast over a period of time known as the weather forecast period,
- other data likely to affect the fluid network including data relating to terrestrial bacteriological flows from river(s),
the said operation prediction step also including a step of on-line calibration of said hydraulic model on the basis of said metrological data,
- a control strategy selection step, comprising selection of a control strategy for the said fluid network on the basis of the data received by the quality models and the hydraulic model,
- a step, referred to as setpoint generation, comprising generation of a control setpoint for an actuator of a control body of the said fluid network, on the basis of the said selected control strategy, the said metrological data, the said meteorological data and the said forecast data,
- transmission of the control setpoint to the said actuator.

2. A process according to claim 1, in which the period of all the process steps is less than a threshold, known as the cycle duration, said cycle duration preferably being less than 5 minutes.

3. A method according to claim 1 or 2, in which a datum of said model data is associated with a state, known as the validation state, the method further comprising a step of filtering said datum on the basis of said validation state.

4. A method according to claim 3, in which the validation state is determined from a validation process, of the automatic type.

5. A method according to any one of the preceding claims, in which equipment for determining the state of metrological equipment determines the state of said metrological equipment and generates metrological equipment state data, the metrological data being generated from said state data.

6. A method according to any one of the preceding claims, wherein the step of generating a weather forecast comprises a step of receiving and a step of processing external data from a rain gauge and/or a rain radar, the weather data being generated from the processing of said external data.

7. A method according to any one of the preceding claims, in which the control strategy is selected manually.

8. A method according to any one of claims 1 to 6, in which the control strategy is selected automatically.

9. A method according to any one of the preceding claims, in which the step of generating metrological data and/or the step of generating meteorological forecasts is carried out at a predetermined frequency, preferably over a period of time of less than 5 minutes.

10. A computer program product which can be downloaded from a communications network and/or stored on a computer-readable medium and/or executable by a microprocessor, **characterised in that** it comprises program code instructions for implementing a method of dynamic real-time control of a fluid network according to any one of the preceding claims.

11. A real-time dynamic control system for a fluid network comprising:
- an operation prediction module configured to generate prediction data relating to operation of the fluid network over a period of time, referred to as the operation prediction period, the operation prediction period preferably being greater than an operation prediction period threshold, said operation prediction period threshold, preferably being greater than 2 hours, said operation forecast module including quality models comprising at least one bacteriological quality model for the natural environment and a hydraulic model, being configured to receive data, referred to as model data, said model data comprising at least:
- "Terrain" measurement data comprising level measurements on a terrain that may affect or be affected by the fluid network,
- metrological data relating to a state of a piece of metrological equipment in the said fluid network, the said metrological data being generated by a module known as a metrological data generation module,
- meteorological data relating to a meteorological forecast affecting the said fluid network, the said meteorological data being generated by a module known as a meteorological forecast management module, the said meteorological data describing a meteorological forecast over a period of time known as the meteorological forecast period,
- other data likely to affect the fluid network including data relating to terrestrial bacteriological flows from river(s),
the said operation prediction module also comprising means for calibrating said hydraulic model on the basis of said metrological data,
- a control strategy selection module, configured to select a control strategy for said fluid network on the basis of data received by the quality models and the hydraulic model,
- a setpoint generation module configured to generate a control setpoint for an actuator of a control body of said fluid network, on the basis of said control strategy, of said metrological data, and said forecast data,
- a transmission module configured to transmit said control setpoint to said actuator.

12. System according to the preceding claim, in which the fluid network is a wastewater network comprising an outlet, preferably a wastewater treatment plant when the fluid network is a water purification network, the metrological data generation step comprises acquisition of metrological data relating to this outlet.
